(19)

**Europäisches Patentamt**

**European Patent Office**

**Office européen des brevets**

(11) **EP 4 389 414 A1**

(12) **EUROPEAN PATENT APPLICATION**

(43) Date of publication:
**26.06.2024 Bulletin 2024/26**

(21) Application number: **22214436.2**

(22) Date of filing: **19.12.2022**

(51) International Patent Classification (IPC):
**B32B 7/023** (2019.01)       **B32B 7/028** (2019.01)
**B32B 27/28** (2006.01)       **B32B 27/30** (2006.01)
**B32B 27/32** (2006.01)       **C08J 5/08** (2006.01)
**C08L 23/06** (2006.01)

(52) Cooperative Patent Classification (CPC):
**B32B 27/28; B32B 7/023; B32B 7/028;**
**B32B 27/30; B32B 27/32; C08J 5/08; C08L 23/06;**
B32B 2250/02; B32B 2250/03; B32B 2250/24;
B32B 2250/246; B32B 2270/00; B32B 2272/00;
B32B 2307/30; B32B 2307/31;       (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **Abu Dhabi Polymers Co. Ltd (Borouge) - Sole**
  **Proprietorship L.L.C.**
  **Abu Dhabi (AE)**
• **Borealis AG**
  **1020 Vienna (AT)**

(72) Inventors:
• **KUMAR DAS, Subrata**
  **Abu Dhabi (AE)**
• **SINGH, Raghvendra**
  **Abu Dhabi (AE)**
• **DEFOER, Johan**
  **Abu Dhabi (AE)**

(74) Representative: **Maiwald GmbH**
  **Elisenhof**
  **Elisenstraße 3**
  **80335 München (DE)**

(54) **MULTILAYER COLLATION SHRINK FILM**

(57)    The present invention relates to a multilayer collation shrink film, comprising at least two layers, e.g. at least three layers, wherein at least one layer (A) comprises at least (A1) a specific multimodal copolymer of ethylene and (A2) LDPE and at least one layer (B) comprises at least (B 1) recycled LDPE and (B2) a specific copolymer of ethylene. The invention further refers to a method for manufacturing this multilayer film and its use in the field of secondary packaging.

**EP 4 389 414 A1**

(52) Cooperative Patent Classification (CPC): (Cont.)
B32B 2307/40; B32B 2307/406; B32B 2307/408;
B32B 2307/50; B32B 2307/54; B32B 2307/546;
B32B 2307/548; B32B 2307/558; B32B 2307/581;
B32B 2307/72; B32B 2307/736; B32B 2307/7376;
B32B 2439/66; B32B 2439/70; B32B 2439/80;
C08J 2300/30; C08J 2323/08

**Description**

The present invention relates to a multilayer collation shrink film, comprising at least two layers, e.g. at least three layers, wherein at least one layer (A) comprises at least (A1) a specific multimodal copolymer of ethylene and (A2) LDPE and at least one layer B) comprises at least (B 1) recycled LDPE and (B2) a specific copolymer of ethylene. The invention further refers to a method for manufacturing this multilayer film and its use in the field of secondary packaging.

**Technical background**

Nowadays, the attempt of using polymers obtained from waste materials for the manufacturing of new products is of increasing interest and importance for ecological reasons and for reducing costs. Due to the growing environmental problems caused by plastics, the focus today is on the recycling of these plastics.

Secondary packagings, like collation shrink films, do not require a food approval and a large amount of recycled material is resulting from flexible applications. Due to the original material design the best use of this material would be in a flexible application. Therefore, secondary packagings are a perfect fit application for using recycled plastics. Nevertheless, the use of recycled materials is limited due to their lower performances. However, multilayer collation shrink films comprising recycled plastics are also known in the prior art.

WO 91/17886 A1 relates to the use of multilayer heat shrinkable film for advantageous high shrinkage but low shrinkage force is combined with the use of recycle scrap of such film to provide a multilayer heat shrinkable film retaining these advantageous properties. Exemplary of the film is a core of a blend of certain linear low density polyethylene with certain highly branched low density polyethylene sandwiched between two relatively thin outer layers of propylene/ethylene copolymer, with the core also containing recycle scrap of the multilayer film.

DE 20 2018 101 226 U1 refers to a packaging for bottles or cans with the following components; 1) an outer packaging for at least partially repackaging bottles or cans consisting of a heat-shrinkable plastic film and 2) a carrying handle fastened to the outer packaging with a carrying handle additional component, wherein all components of the packaging consist of at least one recyclable plastic and wherein the carrying handle additional component consists of a printable plastic and has an imprint.

In most of the multilayer collation shrink films the use of more than 25 % of recycled material is not possible without significant deterioration of the mechanical properties. Inhomogeneities originating from contaminants from the original use, collection and recycling of flexible materials increase the risk for hole formation in an oven, for example a shrink oven. LDPE is the most sensitive material for hole formation due to inhomogeneities.

Based on this it was one objective of the present invention to provide a multilayer collation shrink film allowing the use of bigger amounts of recycled LDPE with low or no hole formation. It was another objective of the present invention that the multilayer collation shrink film shows very good mechanical properties without increasing the film thickness. Furthermore, it was the objective of the present invention that the multilayer collation shrink film has good optical properties, a good shrink behaviour and good puncture resistance and good sealing properties.

**Summary of the invention**

The present invention relates to a multilayer collation shrink film comprising at least the following layers:

(A) a layer comprising the following components:

(A1) a multimodal copolymer of ethylene with at least one comonomer selected from alpha-olefins having from 4 to 10 carbon atoms, which multimodal polymer of ethylene has a density of 920 to 940 kg/m$^3$, preferably of 922 to 937 kg/m$^3$, most preferably of 925 to 935 kg/m$^3$ and a melt flow rate MFR$_2$ of 0.5 to 2.0 g/10 min, preferably 0.7 to 1.8 g/10 min, most preferably 1.0 to 1.6 g/10 min; and
(A2) a LDPE; and

(B) a layer comprising the following components:

(B1) a recycled LDPE;
(B2) a copolymer of ethylene and one comonomer selected from alpha-olefins having from 4 to 10 carbon atoms, which copolymer of ethylene has a density of 930 to 970 kg/m$^3$, preferably of 932 to 965 kg/m$^3$, most preferably of 933 to 963 kg/m$^3$ and a melt flow rate MFR$_2$ of 0.10 to 2.0 g/10 min, preferably of 0.11 to 1.5 g/10 min, most preferably of 0.12 to 1.0 g/10 min.

The present invention further relates to a method for manufacturing the multilayer collation shrink film as described above or below, characterized in that the film is manufactured by a one-step blown film coextrusion process.

Still further, the present invention relates to the use of the multilayer collation shrink film as described above or below for secondary packaging, preferably for bottles and cans, more preferably for bottles and cans in the field of household products, food, healthcare products and beverage products.

**Definitions:**

In the gist of the present invention the term "multimodal" can mean multimodal with respect to molecular weight distribution and includes also therefore bimodal polymers. However, as explained in the detailed description of the components, the components can also be multimodal with respect to other properties, like the MFR and/or the density.

Usually, a polymer composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, there is by definition a lower molecular weight component (LMW) and a higher molecular weight component (HMW). The LMW component has a lower molecular weight than the higher molecular weight component. This difference is preferably at least 5000 g/mol.

In the sense of the present invention it is preferred that all olefins are alpha olefins.

The meaning of low density polyethylene (LDPE) is well known and documented in the literature. Although the term LDPE is an abbreviation for low density polyethylene, the term is understood not to limit the density range, but covers the LDPE-like HP polyethylenes, which are produced by free-radical polymerization in a high-pressure process, with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE) homopolymer, may be unsaturated.

In the gist of the present invention "collation shrink films" are films that are wrapped around an object to be packaged and shrunk to keep the units within the object together. The most common use of these films is in the packaging of multiple containers (items), such as bottles or cans which might contain food, beverages and so on. The collation shrink film is wrapped around a number of the containers, perhaps a 6-pack of drinks or 24-pack of food cans optionally held in a cardboard tray or pad and shrunk around the containers. The wrapping process typically involves a shrink oven or shrink tunnel in which the film and object covered by the film is briefly heated to cause the collation shrink wrapping to occur. The plastic film then collapses around the multiple containers and holds the units in place.

For the purposes of the present description and of the subsequent claims, the term "recycled LDPE" is used to indicate that the material is recovered from post-consumer waste and/or post-industrial waste. Namely, post-consumer waste refers to objects having completed at least a first use cycle (or life cycle), i.e. having already served their first purpose; while industrial waste refers to the manufacturing scrap which does normally not reach a consumer. In the gist of the present invention "recycled LDPE" may also comprise up to 30 wt.-%, preferably up to 25 wt.-%, more preferably up to 20 wt.-% and even more preferably up to 10 wt.-% based on the overall weight of the accordant recycled LDPE of other components like for example LLDPE, MDPE, HDPE and/or additives, filler and colour masterbatches. Respectively, the term "virgin" denotes the newly produced materials and/or objects prior to first use and not being recycled. In case that the origin of the polymer is not explicitly mentioned the polymer is a "virgin" polymer.

The "density" of the materials described in the present description and claims means the density determined according to ISO 1183.

The "melt flow rate" (= MFR) of the polymers described in the present description and claims means the MFR determined according to ISO 1133.

The "melting temperature" of the polymers described in the present description and claims may be measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of 25 to +225°C. Crystallization temperature ($T_c$) and crystallization enthalpy ($H_{cryst}$) are determined from the cooling step, while melting temperature ($T_m$) and heat of fusion ($H_{fusion}$) are determined from the second heating step. The crystallinity is calculated from the heat of fusion by assuming an $H_{fusion}$-value of 209 J/g for a fully crystalline polypropylene (see Brandrup, J., Immergut, E. H., Eds. Polymer Handbook, 3rd ed. Wiley, New York, 1989; Chapter 3).

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

**Detailed description**

Layer (A)

Layer (A) comprises the multimodal copolymer of ethylene with at least one comonomer selected from alpha-olefins having from 4 to 10 carbon atoms (A1) and the LDPE (A2).

It is preferred that the multimodal copolymer of ethylene (A1) is present in layer (A) in an amount of 15 to 90 wt%, preferably from 18 to 85 wt%, most preferably from 20 to 82 wt%, based on the total weight amount of layer (A).

It is further preferred that the LDPE (A2) is present in layer (A) in an amount of 10 to 85 wt%, preferably from 15 to 82 wt%, most preferably from 18 to 80 wt%, based on the total weight amount of layer (A).

The layer (A) can comprise additional polymeric components which are different from the multimodal copolymer of ethylene (A1) and the LDPE (A2). These additional polymeric components are preferably ethylene based polymers. The additional polymeric components, if present, are preferably present in an amount of up to 20 wt.-%, more preferably up to 10 wt.- %.

The composition forming the layer (A) can further comprise additives and/or admixtures. Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the layer (A). Admixtures are preferably selected from the group consisting of pigments, fillers, antiblocking agents and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the overall weight of the layer (A).

In a preferred embodiment the polymeric components of layer (A) consists of the multimodal copolymer of ethylene (A1) and the LDPE (A2).

In said embodiment the weight ratio of the multimodal copolymer of ethylene (A1) and the LDPE (A2) (A1 : A2) is preferably in the range of from 15 : 85 to 90 : 10, more preferably from 18 : 82 to 85 : 15, most preferably from 20 : 80 to 82 : 18.

Further, in said embodiment, the multimodal copolymer of ethylene (A1), the LDPE (A2) and the optional additives and admixtures add up to 100 wt.-% of the total weight of the layer (A).

Multimodal copolymer of ethylene (A1)

The multimodal copolymer of ethylene (A1) is a copolymer of ethylene with at least one comonomer selected from alpha-olefins having from 4 to 10 carbon atoms.

The at least one comonomer is preferably selected from 1-butene, 1-hexene and/or 1-octene, more preferably from 1-butene and/or 1-hexene.

In a preferred embodiment the multimodal copolymer of ethylene (A1) is a terpolymer of ethylene with two comonomers selected from alpha-olefins having from 4 to 10 carbon atoms. The two comonomer is preferably selected from 1-butene, 1-hexene and 1-octene, more preferably from 1-butene and1-hexene.

The term 'a terpolymer of ethylene with two comonomers selected from alpha-olefins having from 4 to 10 carbon atoms' indicates that the multimodal copolymer of ethylene (A1) contains only units derivable from ethylene and two comonomers selected from alpha-olefins having from 4 to 10 carbon atoms, preferably from 1-butene, 1-hexene and 1-octene, more preferably from 1-butene and 1-hexene.

The multimodal copolymer of ethylene (A1) has a total comonomer content, i.e. the content of comonomer units derived from 1-butene and/or 1-hexene, of from 1.0 to 15.0 wt.-%, preferably from 1.5 to 12.5 wt.-%, still more preferably from 2.0 to 10.0 wt.-%.

In one embodiment multimodal copolymer of ethylene (A1) comprises 1-butene comonomer units. In said embodiment the the multimodal copolymer of ethylene (A1) preferably has a 1-butene content of from 0.1 to 5.0 wt.-%, more preferably from 0.2 to 3.5 wt.-%, still more preferably from 0.3 to 2.0 wt.-%, based on the total weight of the multimodal copolymer of ethylene (A1).

In one embodiment multimodal copolymer of ethylene (A1) comprises 1-hexene comonomer units. In said embodiment, the multimodal copolymer of ethylene (A1) preferably has a 1-hexene content of from 2.0 to 15.0 wt.-%, more preferably from 2.5 to 12.5 wt.-%, still more preferably from 3.0 to 10.0 wt.-%, based on the total weight of the multimodal copolymer of ethylene (A1).

The multimodal copolymer of ethylene (A1) can be multimodal in regard to the comonomer distribution.

This means that the multimodal copolymer of ethylene (A1) comprises components with different comonomer content.

When being a copolymer of ethylene and one comonomer selected from alpha-olefins having from 4 to 10 carbon atoms, such as 1-butene or 1-hexene, the multimodal copolymer of ethylene (A1) in one embodiment can comprise an ethylene homopolymer component and a copolymer of ethylene and one comonomer selected from alpha-olefins having from 4 to 10 carbon atoms, such as 1-butene or 1-hexene, component.

When being a copolymer of ethylene and one comonomer selected from alpha-olefins having from 4 to 10 carbon atoms, such as 1-butene or 1-hexene, the multimodal copolymer of ethylene (A1) in another embodiment can comprise two copolymers of ethylene and one comonomer selected from alpha-olefins having from 4 to 10 carbon atoms, such as 1-butene or 1-hexene, components with different comonomer content.

When being a terpolymer of ethylene and two comonomers selected from alpha-olefins having from 4 to 10 carbon atoms, such as 1-butene and 1-hexene, the multimodal copolymer of ethylene (A1) in one embodiment can comprise an ethylene homopolymer component, a copolymer of ethylene and one comonomer selected from alpha-olefins having from 4 to 10 carbon atoms, such as 1-butene, component and a copolymer of ethylene and another comonomer selected from alpha-olefins having from 4 to 10 carbon atoms, such as 1-hexene, component.

When being a terpolymer of ethylene and two comonomers selected from alpha-olefins having from 4 to 10 carbon atoms, such as 1-butene and 1-hexene, the multimodal copolymer of ethylene (A1) in another embodiment can comprise an ethylene homopolymer component and a terpolymer of ethylene and two comonomers selected from alpha-olefins having from 4 to 10 carbon atoms, such as 1-butene and 1-hexene, component.

When being a terpolymer of ethylene and two comonomers selected from alpha-olefins having from 4 to 10 carbon atoms, such as 1-butene and 1-hexene, the multimodal copolymer of ethylene (A1) in yet another embodiment can comprise a copolymer of ethylene and one comonomer selected from alpha-olefins having from 4 to 10 carbon atoms, such as 1-butene, component and a copolymer of ethylene and another comonomer selected from alpha-olefins having from 4 to 10 carbon atoms, such as 1-hexene, component.

In a preferred embodiment, the multimodal copolymer of ethylene (A1) is a terpolymer of ethylene with two comonomers selected from 1-butene and 1-hexene having a 1-butene content of from 0.1 to 5.0 wt.-%, preferably from 0.2 to 3.5 wt.-%, still more preferably from 0.3 to 2.0 wt.-% and a 1-hexene content of from 2.0 to 14.9 wt,-%, more preferably from 2.5 to 12.3 wt.-%, still more preferably from 3.0 to 9.7 wt.-%, based on the total weight of the multimodal copolymer of ethylene (A1).

The multimodal copolymer of ethylene (A1) has a density of 920 to 940 kg/m$^3$, preferably of 922 to 937 kg/m$^3$, most preferably of 925 to 935 kg/m$^3$.

The multimodal copolymer of ethylene (A1) preferably is a linear low density polyethylene (LLDPE).

The multimodal copolymer of ethylene (A1) has a melt flow rate MFR$_2$ of 0.5 to 2.0 g/10 min, preferably 0.7 to 1.8 g/10 min, most preferably 1.0 to 1.6 g/10 min.

The multimodal copolymer of ethylene (A1) preferably has a melting temperature Tm of from 115 to 135°C, more preferably from 118 to 130°C, most preferably from 120 to 128 °C, determined by differential scanning calorimetry (DSC) analysis according to ISO 11357 / part 3 / method C2 in a heat / cool /heat cycle with a scan rate of 10°C/min in the temperature range of 25 to +225°C.

Further, the multimodal copolymer of ethylene (A1) preferably has a ratio of weight average molecular weight to number average molecular weight Mw/Mn of from 2.0 to 6.0, preferably from 2.5 to 5.5, more preferably from 3.0 to 5.0, determined by Gel Permeation Chromatography (GPC) according to ISO 16014-4:2003 and ASTM D 6474-12.

The multimodal copolymer of ethylene (A1) is preferably obtainable by polymerization in the presence of a single site catalyst system. The single site catalyst system preferably comprises catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene compound of a transition metal which bears at least one organic (coordination) ligand and exhibits the catalytic activity alone or together with a cocatalyst. The transition metal compounds are well known in the art and preferably covers compounds of metals from Group 3 to 10, e.g. Group 3 to 7, or 3 to 6, such as Group 4 to 6 of the Periodic

Table, (IUPAC 2007), as well lanthanides or actinides.

In an embodiment the organometallic compound (C) has the following formula (1):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a o -ligand,
each "L" is independently an organic ligand which coordinates to the transition metal "M", "R" is a bridging group linking said organic ligands (L),
"m" is 1, 2 or 3, preferably 2,
"n" is 0, 1 or 2, preferably 1,
"q" is 1, 2 or 3, preferably 2 and
m+q is equal to the valency of the transition metal (M).
"M" is preferably selected from the group consisting of zirconium (Zr), hafnium (Hf), or titanium (Ti), more preferably selected from the group consisting of zirconium (Zr) and hafnium (Hf).
"X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

Most preferred the metallocene catalyst, which means the catalytically active metallocene complex, as defined above, is used together With a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylaluminoxane (MAO), tetraisobutylalumoxane (TIBAO) or hexaisobutylalumoxane (HIBAO).

The multimodal copolymer of ethylene (A1) may be produced in any suitable polymerization process known in the art, which comprise at least one polymerization stage, where polymerization is typically carried out in solution, slurry, bulk or gas phase. Preferably the multimodal copolymer of ethylene (A1) is produced in a multistage polymerization process comprising at least two polymerization zones.

A first ethylene polymer component is preferably produced in a first polymerization zone and a second ethylene polymer component is preferably produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations.

Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mol, preferably from about 2 to about 20 % by mol and in particular from about 3 to about 12 % by mol.

The temperature in the slurry polymerization is typically from 50 to 115°C, preferably from 60 to 110°C and in particular from 70 to 100°C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 80 to 110°C, preferably from 85 to 105°C and the pressure is from 30 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, one or more comonomers selected from alpha-olefins having from 4 to 10 carbon atoms, such as 1-butene and/or 1-hexene, can be added into the reactor e.g. to control the density of the polymer product. The actual amount of such hydrogen and comonomer feeds depends on the catalyst that is used and the desired melt index (or molecular weight) and density (or comonomer content) of the resulting polymer.

The polymerization in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with one or more comonomers selected from alpha-olefins having from 4 to 10 carbon atoms, such as 1-butene and/or 1-hexene, in the presence of a polymerization catalyst and, preferably in the presence of the reaction mixture from the first polymerization zone in an upwards moving gas stream. The reactor typically contains a fluidized bed comprising the growing polymer particles containing the active catalyst located above a fluidization grid. The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, amongst others, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised.

The vaporisation heat then contributes to the removal of the reaction heat. This kind of operation is called condensed mode and variations of it are disclosed, among others, in WO-A-2007/025640, USA-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-OO/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100°C, preferably from 65 to 90°C. The pressure is suitably from 10 to 40 bar, preferably from 15 to 30 bar.

The polymerization of the first ethylene polymer component and second ethylene polymer component in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer.

The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 25 to 70°C.

The pressure is not critical and is typically from 1 to 150 bar, preferably from 10 to 100 bar. The catalyst components are preferably all introduced to the prepolymerization step. Preferably the reaction product of the prepolymerization step is then introduced to the first polymerization zone.

The multimodal copolymer of ethylene (A1) obtained from the multistage process can be is extruded and pelletized and then blended with the LDPE (A2) in pellet form.

The multimodal copolymer of ethylene (A1) obtained from the multistage process can also be blended with the LDPE (A2) in powder form.

The multimodal copolymer of ethylene (A1) is preferably a virgin polymer.

LDPE (A2)

Preferably the LDPE (A2) has a density of from 915 to 935 kg/m$^3$, preferably of 917 to 932 kg/m$^3$, most preferably of 920 to 930 kg/m$^3$.

It is further preferred that the LDPE (A2) has a melt flow rate MFR$_2$ of 0.1 to 2.0 g/10 min, preferably of 0.2 to 1.5 g/10 min, most preferably of 0.3 to 1.2 g/10 min.

The LDPE (A2) preferably comprises virgin LDPE, recycled LDPE or mixtures of virgin LDPE and recycled LDPE.

In a first embodiment, the LDPE (A2) consists of virgin LDPE.

In a second embodiment, the LDPE consists of recycled LDPE.

In a third embodiment, the LDPE consists of a mixture of virgin LDPE and recycled LDPE. In said third embodiment the weight ratio of virgin LDPE to recycled LDPE in the mixture is preferably in the range of 5:1 to 1:2, more preferably of 4:1 to 1:1, most preferably from 3:1 to 2:1.

Virgin LDPE is preferably an ethylene homopolymer.

Recycled LDPEs preferably have the same properties, more preferably are the same as described below for recycled LDPE (B1).

Virgin LDPEs meeting the requirements of the LDPE (A2) as described above or below are known and can be bought from suppliers such as Borouge or Borealis.

Recycled LDPEs meeting the requirements of the LDPE (A2) as described above or below are known and can be bought from suppliers such as Suzhou Jinhui Technology or Plaspulp.

Layer (B)

Layer (B) comprises a recycled LDPE (B1) and a copolymer of ethylene and one comonomer selected from alpha-olefins having from 4 to 10 carbon atoms (B2).

It is preferred that the recycled LDPE (B1) is present in layer (B) in an amount of 20 to 85 wt%, preferably from 25 to 80 wt%, most preferably from 27 to 77 wt%, based on the total weight amount of layer (B).

It is further preferred that the copolymer of ethylene and one comonomer selected from alpha-olefins having from 4 to 10 carbon atoms (B2) is present in layer (B) in an amount of 15 to 80 wt%, preferably from 20 to 75 wt%, most preferably from 23 to 73 wt%, based on the total weight amount of layer (B).

The layer (B) can further comprise

(B3) a multimodal polymer of ethylene with at least two different comonomers selected from alpha-olefins having from 4 to 10 carbon atoms, which multimodal polymer of ethylene has a density of 910 to 930 kg/m$^3$, preferably of 912 to 927 kg/m$^3$, most preferably of 915 to 925 kg/m$^3$ and a melt flow rate MFR$_2$ of 0.5 to 2.5 g/10 min, preferably 1.0 to 2.0 g/10 min, most preferably 1.2 to 1.8 g/10 min.

If present, the multimodal copolymer of ethylene with at least two different comonomers selected from alpha-olefins having from 4 to 10 carbon atoms (B3) is preferably present in layer (B) in an amount of 10 to 30 wt%, preferably from 15 to 28 wt%, most preferably from 20 to 26 wt%, based on the total weight amount of layer (B).

The layer (B) can comprise additional polymeric components which are different from the recycled LDPE (B1), the copolymer of ethylene (B2) and the optional multimodal copolymer of ethylene (B3). These additional polymeric components are preferably ethylene based polymers. The additional polymeric components, if present, are preferably present in an amount of up to 20 wt.-%, more preferably up to 10 wt.-%.

The composition forming the layer (B) can further comprise additives and/or admixtures. Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the layer (B). Admixtures are preferably selected from the group consisting of pigments, fillers, antiblocking agents and mixtures thereof, preferably these additives are contained in an the range from 0 to 5 wt.-%, preferably in the range from 0 to 3 wt.-%, more preferably in the range from 0 to 2 wt.-% and most preferably from 0 to 1 wt.-% based on the overall weight of the layer (B).

In one embodiment the polymeric components of layer (B) consists of the recycled LDPE (B 1) and the copolymer of ethylene (B2).

In said embodiment the recycled LDPE (B1) is preferably present in layer (B) in an amount of 20 to 85 wt%, preferably from 25 to 80 wt%, most preferably from 27 to 77 wt%, based on the total weight amount of layer (B).

Further, in said embodiment the copolymer of ethylene (B2) is preferably present in layer (B) in an amount of 15 to 80 wt%, preferably from 20 to 75 wt%, most preferably from 23 to 73 wt%, based on the total weight amount of layer (B).

The weight ratio of the recycled LDPE (B1) and the copolymer of ethylene (B2) (B1 : B2) is preferably in the range of from 20 : 80 to 85 : 15, more preferably from 25 : 75 to 80 : 20, most preferably from 27 : 73 to 77 : 23.

Further, in said embodiment, the recycled LDPE (B1), the copolymer of ethylene (B2) and the optional additives and admixtures add up to 100 wt.-% of the total weight of the layer (B).

In another embodiment the polymeric components of layer (B) consists of the recycled LDPE (B1), the copolymer of ethylene (B2) and the multimodal copolymer of ethylene (B3).

In said embodiment the recycled LDPE (B1) is preferably present in layer (B) in an amount of 20 to 75 wt%, preferably from 25 to 65 wt%, most preferably from 27 to 57 wt%, based on the total weight amount of layer (B).

Further, in said embodiment the copolymer of ethylene (B2) is preferably present in layer (B) in an amount of 15 to 50 wt%, preferably from 20 to 35 wt%, most preferably from 23 to 30 wt%, based on the total weight amount of layer (B).

Still further, in said embodiment the multimodal copolymer of ethylene (B3) is preferably present in layer (B) in an amount of 10 to 30 wt%, preferably from 15 to 28 wt%, most preferably from 20 to 26 wt%, based on the total weight amount of layer (B).

The weight ratio of the recycled LDPE (B1) to the combined weight of the copolymer of ethylene (B2) and multimodal copolymer of ethylene (B3) (B1 : B2+B3) is preferably in the range of from 20 : 80 to 75 : 25, more preferably from 25 : 75 to 65 : 35, most preferably from 27 : 73 to 57 : 43.

Further, in said embodiment, the recycled LDPE (B1), the copolymer of ethylene (B2), multimodal copolymer of ethylene (B3) and the optional additives and admixtures add up to 100 wt.-% of the total weight of the layer (B).

Recycled LDPE (B1)

The recycled LDPE (B1) preferably originates from post consumer waste or post industrial waste, preferably from post consumer waste.

The recycled LDPE (B1) can comprise up to 20 wt.-% of constituents originating from the first use. Type and amount of these constituents influence the physical properties of recycled LDPE (B1). The properties given below refer to the main component.

The recycled LDPE (B1) preferably has a density of from 915 to 935 kg/m$^3$, more preferably of 917 to 932 kg/m$^3$, most preferably of 920 to 930 kg/m$^3$.

Further, the recycled LDPE (B1) preferably has a melt flow rate MFR$_2$ of 0.1 to 2.0 g/10 min, more preferably of 0.3 to 1.7 g/10 min, most preferably of 0.5 to 1.5 g/10 min.

Still further, the recycled LDPE (B1) preferably has a tensile modulus of from 200 to 450 MPa, preferably from 225 to 425 MPa, most preferably from 250 to 400 MPa.

Further, the recycled LDPE (B1) preferably has a tensile stress at yield of from 6.0 to 15.0 MPa, more preferably from 7.5 to 12.5 MPa, most preferably from 9.0 to 11.5 MPa.

Still further, the recycled LDPE (B1) preferably has a tensile strain at break of from 350 to 1200 %, more preferably from 375 to 1100 %, most preferably from 400 to 1000 %.

Additionally, the recycled LDPE (B1) preferably has a flexural modulus of from 200 to 500 MPa, more preferably from 225 to 475 MPa, most preferably from 250 to 450 MPa.

Further, the recycled LDPE (B1) preferably has a Charpy notched impact strength at 23°C of from 40 to 120 $kJ/m^2$, more preferably from 45 to 110 $kJ/m^2$, most preferably from 50 to 100 $kJ/m^2$.

Still further, the recycled LDPE (B1) preferably has a Charpy notched impact strength at - 20°C of from 5.0 to 20.0 $kJ/m^2$, more preferably from 6.0 to 18.0 $kJ/m^2$, most preferably from 7.0 to 16.0 $kJ/m^2$.

Additionally, the recycled LDPE (B1) preferably has a strain hardening factor of from 1.5 to 5.0, more preferably from 1.8 to 4.5, when measured at 180°C, at a strain rate of 3.0 $s^{-1}$ and a Hencky strain of 2.5.

Recycled LDPE's meeting the requirements of the recycled LDPE (B1) as described above or below are known and can be bought from suppliers such as Suzhou Jinhui Technology or Plaspulp.

Copolymer of ethylene (B2)

The copolymer of ethylene (B2) is a copolymer of ethylene and one comonomer selected from alpha-olefins having from 4 to 10 carbon atoms.

The comonomer is preferably selected from 1-butene, 1-hexene or 1-octene, more preferably from 1-butene or 1-hexene.

The term 'a copolymer of ethylene with one comonomer selected from alpha-olefins having from 4 to 10 carbon atoms' indicates that the copolymer of ethylene (B2) contains only units derivable from ethylene and one comonomer selected from alpha-olefins having from 4 to 10 carbon atoms, preferably from 1-butene, 1-hexene or 1-octene, more preferably from 1-butene or 1-hexene.

The copolymer of ethylene (B2) has a total comonomer content of from 0.1 to 15.0 wt.-%, preferably from 0.15 to 12.5 wt.-%, still more preferably from 0.2 to 10.0 wt.-%.

In one embodiment the copolymer of ethylene (B2) is a copolymer of ethylene and 1-butene comonomer units, wherein the 1-butene comonomer units are the only comonomer units present in the copolymer of ethylene (B2). In said embodiment the the copolymer of ethylene (B2) preferably has a 1-butene content of from 0.1 to 10.0 wt.-%, more preferably from 0.15 to 9.0 wt.-%, still more preferably from 0.2 to 8.0 wt.-%, based on the total weight of the copolymer of ethylene (B2).

In one embodiment copolymer of ethylene (B2) is a copolymer of ethylene and 1-hexene comonomer units, wherein the 1-hexene comonomer units are the only comonomer units present in the copolymer of ethylene (B2). In said embodiment, the copolymer of ethylene (B2) preferably has a 1-hexene content of from 0.1 to 15.0 wt.-%, more preferably from 0.15 to 12.5 wt.-%, still more preferably from 0.2 to 10.0 wt.-%, based on the total weight of the copolymer of ethylene (B2).

The copolymer of ethylene (B2) can be unimodal in regard to the comonomer distribution. This means that the comonomer selected from alpha-olefins having from 4 to 10 carbon atoms, such as 1-butene or 1-hexene are uniformly distributed in the copolymer of ethylene (B2).

The copolymer of ethylene (B2) can be multimodal in regard to the comonomer distribution. This means that the copolymer of ethylene (B2) comprises components with different comonomer content.

The copolymer of ethylene (B2) in one embodiment can comprise an ethylene homopolymer component and a copolymer of ethylene and one comonomer selected from alpha-olefins having from 4 to 10 carbon atoms, such as 1-butene or 1-hexene, component.

The copolymer of ethylene (B2) in another embodiment can comprise two copolymers of ethylene and one comonomer selected from alpha-olefins having from 4 to 10 carbon atoms, such as 1-butene or 1-hexene, components with different comonomer content.

The copolymer of ethylene (B2) has a melt flow rate $MFR_2$ of 0.10 to 2.0 g/10 min, preferably of 0.11 to 1.5 g/10 min, most preferably of 0.12 to 1.0 g/10 min.

Further, the copolymer of ethylene (B2) has a density of 930 to 970 $kg/m^3$, preferably of 932 to 965 $kg/m^3$, most preferably of 933 to 963 $kg/m^3$.

In one embodiment the copolymer of ethylene (B2) is a medium density copolymer of ethylene and one comonomer selected from alpha-olefins having from 4 to 10 carbon atoms having a density of 930 to 945 $kg/m^3$, preferably of 932 to 942 $kg/m^3$, most preferably of 933 to 940 $kg/m^3$.

Said medium density copolymer preferably has a melt flow rate $MFR_2$ of 0.10 to 0.50 g/10 min, preferably of 0.10 to 0.40 g/10 min, most preferably of 0.12 to 0.30 g/10 min.

In another embodiment the copolymer of ethylene (B2) is a high density copolymer of ethylene and one comonomer selected from alpha-olefins having from 4 to 10 carbon atoms, having a density of 950 to 970 kg/m$^3$, preferably of 952 to 965 kg/m$^3$, most preferably of 955 to 963 kg/m$^3$.

Said high density copolymer preferably has a melt flow rate MFR$_2$ of 0.30 to 2.0 g/10 min, preferably of 0.40 to 1.5 g/10 min, most preferably of 0.50 to 1.0 g/10 min.

In yet another embodiment the copolymer of ethylene (B2) is a mixture of said medium density copolymer of ethylene and said high density copolymer of ethylene.

The copolymer of ethylene (B2) preferably has a melting temperature Tm of from 120 to 140°C, more preferably from 122 to 138°C, most preferably from 125 to 135°C, determined by differential scanning calorimetry (DSC) analysis according to ISO 11357 / part 3 / method C2 in a heat / cool /heat cycle with a scan rate of 10°C/min in the temperature range of 25 to +225°C.

Copolymers of ethylene meeting the requirements of the copolymer of ethylene (B2) as described above or below are known and can be bought from suppliers such as Borouge or Borealis.

Multimodal copolymer of ethylene (B3)

The optional multimodal copolymer of ethylene (B3) is a multimodal polymer of ethylene with at least two different comonomers selected from alpha-olefins having from 4 to 10 carbon atoms.

The at least two comonomers are preferably selected from 1-butene, 1-hexene and 1-octene, more preferably from 1-butene and 1-hexene.

In a preferred embodiment the multimodal copolymer of ethylene (B3) is a terpolymer of ethylene with two comonomers selected from alpha-olefins having from 4 to 10 carbon atoms. The two comonomer is preferably selected from 1-butene, 1-hexene and 1-octene, more preferably from 1-butene and 1-hexene.

The term 'a terpolymer of ethylene with two comonomers selected from alpha-olefins having from 4 to 10 carbon atoms' indicates that the multimodal copolymer of ethylene (B3) contains only units derivable from ethylene and two comonomers selected from alpha-olefins having from 4 to 10 carbon atoms, preferably from 1-butene, 1-hexene and 1-octene, more preferably from 1-butene and 1-hexene.

The multimodal copolymer of ethylene (B3) preferably comprises an ethylene 1-butene copolymer component (i) and an ethylene 1-hexene copolymer component (ii), where 1-butene and 1-hexene are the only comonomers present in the respective component. More preferably the copolymers (i) and (ii) have different MFR values and/or different densities. It is furthermore preferred that copolymer (i) has a higher density than copolymer (ii).

The multimodal copolymer of ethylene (B3) preferably is a terpolymer comprising an ethylene 1-butene copolymer (i) and an ethylene 1-hexene copolymer (ii).

The multimodal copolymer of ethylene (B3) preferably has a MFR$_2$ in the range from 0.5 to 2.5 g/10 min, preferably in the range from 1.0 to 2.0 g/10 min and more preferably in the range from 1.2 to 1.8 g/10 min determined according to ISO 1133 at 190°C under 2.16 kg load.

Further, the multimodal copolymer of ethylene (B3) preferably has a MFR$_{21}$/ MFR$_2$ in the range from 13 to 35, preferably in the range from 15 to 30 and more preferably in the range from 15 to 25 (MFR$_{21}$ determined at 190°C under 21.6 kg load).

Still further, the multimodal copolymer of ethylene (B3) preferably has a MWD (molecular weight distribution) in the range from 2 to 7, preferably in the range from 2 to 6 and more preferably in the range from 2 to 5.

Additionally, the multimodal copolymer of ethylene (B3) preferably has one or more of the features:

a) MFR$_2$ of 0.5 to 2.5 g/10 min (according to ISO 1133 at 190°C under 2.16 kg load);
b) MFR$_{21}$/ MFR$_2$ of 13 to 35 (MFR$_{21}$ at 190°C under 21.6 kg load);
c) MWD of 5 or less, preferably between 2 and 5.

The multimodal copolymer of ethylene (B3) preferably is a linear low density polyethylene (LLDPE). Even more preferably the density of the multimodal copolymer of ethylene (B3) is in the range from 910 to 930 kg/m$^3$ and more preferably in the range from 915 to 925 kg/m$^3$.

The multimodal copolymer of ethylene (B3) preferably has a Mw in the range from 70,000 to 200,000 g/mol and preferably in the range from 80,000 to 150,000 g/mol.

Still further, the multimodal copolymer of ethylene (B3) preferably comprises the ethylene copolymer component (i) in an amount in the range from 30 to 70 wt.-%, preferably in the range from 40 to 60 wt.-%, more preferably in the range from 35 to 50 wt.-%, more preferably in the range from 40 to 50 wt.-% and the ethylene copolymer component (ii) in an amount in the range from 70 to 30 wt.-%, preferably in the range from 60 to 40 wt.-%, more preferably in the range from 50 to 65 wt.-%, more preferably in the range from 50 to 60 wt.- %, based on the total amount (100 wt.-%) of the multimodal copolymer of ethylene (B3).

The multimodal copolymer of ethylene (B3) preferably consists of the ethylene copolymers (i) and (ii) as the sole polymer components. Accordingly, the split between ethylene copolymer (i) to ethylene copolymer (ii) is of (30 to 70):(70 to 30) preferably of (40 to 60):(60 to 40), more preferably of (35 to 50):(65 to 50), more preferably of (40 to 50):(50 to 60), wt.-%.

The multimodal copolymer of ethylene (B3) preferably comprises a lower Mw copolymer (i) and a higher molecular weight copolymer (ii).

The copolymer (i) preferably has a $MFR_2$ of 1 to 50 g/10 min, preferably of 1 to 40, more preferably of 1 to 30, more preferably of 2 to 20, more preferably of 2 to 15, even more preferably of 2 to 10 g/10 min.

More preferably, the ethylene copolymer (i) has higher $MFR_2$ than ethylene copolymer (ii). Even more preferably, the ratio of the $MFR_2$ of ethylene copolymer (i) to the $MFR_2$ of the ethylene copolymer (ii) is of 2 to 50, preferably of 5 to 40, more preferably of 10 to 30, most preferably of 10 to 25.

Further, the ratio of the $MFR_2$ of ethylene copolymer (i) to the $MFR_2$ of the final multimodal copolymer of ethylene (B3) is preferably in the range from 1 to 15, more preferably of 1.5 to 12, more preferably of 2 to 10, most preferably of 3 to 8.

If the $MFR_2$ of ethylene polymer copolymer, e.g. copolymer (ii), cannot be measured, because it cannot be isolated from the mixture of at least ethylene copolymers (i) and (ii), then it can be calculated using a log mixing rule.

Naturally, in addition to multimodality with respect to, i.e. difference between, the MFR of the ethylene copolymers (i) and (ii), the multimodal copolymer of ethylene (B3) can also be multimodal e.g. with respect to one or both of the two further properties:

multimodality with respect to, i.e. difference between, the comonomer type or the comonomer content(s) present in the ethylene copolymers (i) and (ii), or both the type and content(s) of comonomers present in the ethylene copolymers (i) and (ii); and/or
the density of the ethylene copolymers (i) and (ii).

Preferably, the multimodal copolymer of ethylene (B3) is further multimodal with respect to comonomer type and/or comonomer content (mol-%), preferably wherein the alpha-olefin comonomer having from 4 to 10 carbon atoms of ethylene copolymer (i) is different from the alpha-olefin comonomer having from 4 to 10 carbon atoms of ethylene copolymer (ii), preferably wherein the alpha-olefin comonomer having from 4 to 10 carbon atoms of ethylene copolymer (i) is 1-butene and the alpha-olefin comonomer having from 4 to 10 carbon atoms of ethylene copolymer (ii) is 1-hexene.

Preferably, the ratio of [the amount (mol-%) of alpha-olefin comonomer having from 4 to 10 carbon atoms comonomer present in ethylene copolymer (i)] to [the amount (mol%) of at least two alpha-olefin comonomers having from 4 to 10 carbon atoms of the final multimodal polymer of ethylene B3)] is of 0.10 to 0.6, preferably of 0.15 to 0.5, more preferably the ethylene copolymer (i) has a lower amount (mol%) of comonomer than the ethylene copolymer (ii).

The comonomer content of copolymers (i) and (ii) can be measured, or, in case, and preferably, one of the components is produced first and the other thereafter in the presence of the first produced in so called multistage process, then the comonomer content of the first produced copolymer, e.g. copolymer (i), can be measured and the comonomer content of the other copolymer, e.g. copolymer (ii), can be calculated according to following formula:

$$\textit{Comonomer content (mol-\%) in copolymer (ii)} = \textit{(comonomer content (mol-\%) in final}$$

$$\textit{product - (weight fraction of copolymer (i) * comonomer content (mol-\%) in copolymer (i)) /}$$

$$\textit{(weight fraction of copolymer (ii))}$$

Copolymers (i) and (ii) can be produced in the same or different reactors.

According to another preferred embodiment of the present invention the amount (mol-%) of alpha-olefin comonomer having from 4 to 10 carbon atoms present in the ethylene copolymer (i) is in the range from 0.03 to 5.0 mol-%, preferably in the range from 0.05 to 4.0 mol-%, more preferably in the range from 0.1 to 3.0 mol-%, even more preferably in the range from 0.1 to 2.0 mol-%, more preferably in the range from 0.15 to 1.5 mol-% and even more preferably in the range from 0.15 to 1.0 mol%.

More preferably, the total amount of comonomers present in the multimodal copolymer of ethylene (B3) is in the range from 0.5 to 10 mol-%, preferably the in range from 1.0 to 8 mol-%, more preferably in the range from 1.0 to 5 mol-% and more preferably in the range from 1.5 to 5.0 mol-%.

The multimodal copolymer of ethylene (B3) is further multimodal with respect to difference in density between the ethylene copolymer (i) and ethylene copolymer (ii). Preferably, the density of ethylene copolymer (i) is different, preferably higher, than the density of the ethylene copolymer (ii). More preferably the density of the ethylene copolymer (i) is in the range from 925 to 950 and preferably in the range from 930 to 945 kg/m$^3$.

In a preferred embodiment the multimodal copolymer of ethylene (B3) comprises at least

- an ethylene copolymer (i) and
- an ethylene copolymer(ii), wherein the $MFR_2$ of ethylene copolymer (i) is higher than the $MFR_2$ of ethylene copolymer (ii), preferably wherein the ratio of the $MFR_2$ of ethylene polymer component (i) to the $MFR_2$ of the ethylene polymer component (ii) is in the range from 2 to 50, preferably in the range from 5 to 40 and more preferably in the range from 10 to 30 and/or wherein the ratio of the $MFR_2$ of ethylene copolymer (i) to the $MFR_2$ of the final multimodal copolymer of ethylene (B3) is in the range from 1 to 15, preferably of 1.5 to 12, more preferably of 2 to 10, most preferably of 3 to 8.

It is preferred that the density of the multimodal copolymer of ethylene (B3) is in the range from 910 to 930 $kg/m^3$ and an $MFR_2$ is in the range from 0.5 to 2.5 g/10 min.

Preferably the multimodal polymer of ethylene has a density of 910 to 930 $kg/m^3$, preferably of 912 to 927 $kg/m^3$, most preferably of 915 to 925 $kg/m^3$ and a melt flow rate $MFR_2$ of 0.5 to 2.5 g/10 min, more preferably 1.0 to 2.0 g/10 min, most preferably 1.2 to 1.8 g/10 min

The multimodal copolymer of ethylene (B3) is preferably produced using a single site catalyst, preferably the ethylene copolymers are produced using the same single site catalyst.

It is furthermore preferred that the multimodal copolymer of ethylene (B3) is bimodal.

Such multimodal ethylene terpolymers are disclosed, for example, in WO 2016/083208. As far as definitions (such as for the "modality" of a polymer) and production methods for these ethylene terpolymers are concerned, it is referred to WO2016/083208. Furthermore, all embodiments and preferred embodiments of such ethylene terpolymers as described in WO2016/083208, which have a density in the range of from 910 to 930 $kg/m^3$ are also preferred embodiments of the multimodal ethylene terpolymer in the present disclosure, whether or not explicitly described herein.

The multimodal copolymer of ethylene (B3) is preferably a virgin polymer.

Copolymers of ethylene meeting the requirements of the copolymer of ethylene (B3) as described above or below are known and can be bought from suppliers such as Borouge or Borealis.

Collation shrink film

The multilayer collation shrink film of the present invention comprises at least layers (A) and (B) as described above or below.

It is preferred that the multilayer collation shrink film comprises up to seven layers, preferably up to five layers, most preferably consists of 3 layers.

In one embodiment, the film further comprises additional layers such as a sub-inner surface layer (I1) and/or a sub-outer surface layer (O1), wherein the sub-inner surface layer (I1) is present between the inner surface layer (A) and the core layer (B), and the sub-outer surface layer (O1) is present between the outer surface layer (A) and the core layer (B). Optionally, the film comprises more than one of any of the layers O1, B, 11 or A for five layer films or seven layer films

Thereby, layer (B) is preferably the core layer and layer (A) is preferably an outer layer in adherent contact with core layer (B).

For 3-layer films, it is preferred that layer (B) is the core layer which is sandwiched between two layers (A), wherein both layers (A) are preferably in adherent contact with each surface of core layer (B).

"In adherent contact" in this context means that there is no additional layer between the layer (B) and the layer (A).

It is preferred that the two layers (A) consist of identical components and are most preferably the same.

In this context "being the same" means that the outer layers (A) consist not only of the same components (amount and chemical composition), but also have the same layer thickness, so that the multilayer film is symmetric.

The layer (A) of the multilayer collation shrink film preferably has a thickness in the range from 2 to 25 $\mu$m, more preferably from 3 to 23 $\mu$m and most preferably from 5 to 20 $\mu$m.

The layer (B) of the multilayer collation shrink film preferably has a thickness in the range from 10 to 100 $\mu$m, more preferably from 15 to 80 $\mu$m and most preferably from 20 to 60 $\mu$m.

The overall film thickness of the multilayer collation shrink film is preferably in the range from 15 to 100 $\mu$m, more preferably from 20 to 90 $\mu$m and most preferably from 25 to 80 $\mu$m.

The thickness of one layer (B) in the multilayer collation shrink film is in the range of from 40 to 70 %, preferably from 44 to 66 %, most preferably from 48 to 62 %, based on the total thickness of the multilayer collation shrink film.

The thickness of one layer (A) in the multilayer collation shrink film, preferably of each of both layers (A) in the multilayer collation shrink film, is in the range of from 10 to 30 %, preferably from 15 to 28 %, most preferably from 19 to 26 %, based on the total thickness of the multilayer collation shrink film.

The total amount of recycled LDPE in the multilayer collation shrink film is from 10 to 55 wt%, preferably from 12 to 53 wt%, most preferably from 15 to 50 wt%, based on the total weight of the multilayer collation shrink film.

The recycled LDPE is present in the layer (B) and can also be present in the layer (A) as described above and below.

The multilayer collation shrink film preferably has one or more or all of the following properties:

- a shrinkage in machine direction of from 60 to 85%, preferably from 65 to 82%, most preferably from 70 to 80%; and/or
- a shrinkage in transverse direction of from 5 to 25%, preferably from 7 to 22%, most preferably from 9 to 20%; and/or
- a haze of from 5.0 to 19.0%, preferably from 7.0 to 18.0%, most preferably from 8.0 to 17.0%; and/or
- a gloss at 60° of from 70 to 130, preferably from 73 to 120, most preferably from 75 to 110; and/or
- a tensile modulus in machine direction of from 225 to 600 MPa, preferably from 240 to 550 MPa, most preferably from 250 to 500 MPa; and/or
- a tensile modulus in transverse direction of from 250 to 650 MPa, preferably from 265 to 600 MPa, most preferably from 275 to 550 MPa; and/or
- a tensile stress at break in machine direction of from 12.0 to 40.0 MPa, preferably from 13.0 to 38.0 MPa, most preferably from 14.0 to 36.0 MPa; and/or
- a tensile stress at break in transverse direction of from 15.0 to 40.0 MPa, preferably from 18.0 to 36.0 MPa, most preferably from 20.0 to 32.0 MPa; and/or
- a puncture energy of from 0.8 to 3.0 J, preferably from 0.9 to 2.5 J, most preferably from 1.0 to 2.0 J; and/or
- a sealing initiation temperature of from 100 to 125°C, preferably from 103 to 120°C, most preferably from 105 to 115°C.

In a first preferred embodiment the multilayer collation shrink film consists of a core layer (B) sandwiched by two outer layers (A), wherein

both outer layers (A) consist of
(A1) 40 to 60 wt.-%, preferably 45 to 55 wt.-% of the multimodal copolymer of ethylene with at least one comonomer selected from alpha-olefins having from 4 to 10 carbon atoms, which multimodal polymer of ethylene has a density of 920 to 940 $kg/m^3$, preferably of 922 to 937 $kg/m^3$, most preferably of 925 to 935 $kg/m^3$ and a melt flow rate $MFR_2$ of 0.5 to 2.0 g/10 min, preferably 0.7 to 1.8 g/10 min, most preferably 1.0 to 1.6 g/10 min;
(A2) 40 to 60 wt.-%, preferably 45 to 55 wt.-% of the LDPE,
both based on the total weight of outer layers (A); and
optional additives and admixtures;
whereby both outer layers (A) are preferably identical in composition; and core layer (B) consists of
(B1) 20 to 40 wt.-%, preferably 25 to 35 wt.-% of the recycled LDPE;
(B2) 60 to 80 wt.-%, preferably 65 to 75 wt.-% of the copolymer of ethylene and one comonomer selected from alpha-olefins having from 4 to 10 carbon atoms, which copolymer of ethylene has a density of 930 to 970 $kg/m^3$, preferably of 932 to 965 $kg/m^3$, most preferably of 933 to 963 $kg/m^3$ and a melt flow rate $MFR_2$ of 0.10 to 2.0 g/10 min, preferably of 0.11 to 1.5 g/10 min, most preferably of 0.12 to 1.0 g/10 min,
both based on the total weight of core layer (B); and
optional additives and admixtures.

In a second preferred embodiment the multilayer collation shrink film consists of a core layer (B) sandwiched by two outer layers (A), wherein

both outer layers (A) consist of
(A1) 70 to 90 wt.-%, preferably 75 to 85 wt.-% of the multimodal copolymer of ethylene with at least one comonomer selected from alpha-olefins having from 4 to 10 carbon atoms, which multimodal polymer of ethylene has a density of 920 to 940 $kg/m^3$, preferably of 922 to 937 $kg/m^3$, most preferably of 925 to 935 $kg/m^3$ and a melt flow rate $MFR_2$ of 0.5 to 2.0 g/10 min, preferably 0.7 to 1.8 g/10 min, most preferably 1.0 to 1.6 g/10 min;
(A2) 10 to 30 wt.-%, preferably 15 to 25 wt.-% of the LDPE,
both based on the total weight of outer layers (A); and
optional additives and admixtures;
whereby both outer layers (A) are preferably identical in composition; and core layer (B) consists of
(B1) 40 to 60 wt.-%, preferably 45 to 55 wt.-% of the recycled LDPE;
(B2) 15 to 35 wt.-%, preferably 20 to 30 wt.-% of the copolymer of ethylene and one comonomer selected from alpha-olefins having from 4 to 10 carbon atoms, which copolymer of ethylene has a density of 930 to 970 $kg/m^3$, preferably of 932 to 965 $kg/m^3$, most preferably of 933 to 963 $kg/m^3$ and a melt flow rate $MFR_2$ of 0.10 to 2.0 g/10 min, preferably of 0.11 to 1.5 g/10 min, most preferably of 0.12 to 1.0 g/10 min,
(B3) 15 to 35 wt.-%, preferably 20 to 30 wt.-% of the multimodal polymer of ethylene with at least two different comonomers selected from alpha-olefins having from 4 to 10 carbon atoms, which multimodal polymer of ethylene has a density of 910 to 930 $kg/m^3$, preferably of 912 to 927 $kg/m^3$, most preferably of 915 to 925 $kg/m^3$ and a melt

flow rate $MFR_2$ of 0.5 to 2.5 g/10 min, preferably 1.0 to 2.0 g/10 min, most preferably 1.2 to 1.8 g/10 min, all based on the total weight of core layer (B); and
optional additives and admixtures.

In a third preferred embodiment the multilayer collation shrink film consists of a core layer (B) sandwiched by two outer layers (A), wherein

both outer layers (A) consist of
(A1) 30 to 60 wt.-%, preferably 35 to 55 wt.-% of the multimodal copolymer of ethylene with at least one comonomer selected from alpha-olefins having from 4 to 10 carbon atoms, which multimodal polymer of ethylene has a density of 920 to 940 kg/m$^3$, preferably of 922 to 937 kg/m$^3$, most preferably of 925 to 935 kg/m$^3$ and a melt flow rate $MFR_2$ of 0.5 to 2.0 g/10 min, preferably 0.7 to 1.8 g/10 min, most preferably 1.0 to 1.6 g/10 min;
(A2) 40 to 70 wt.-%, preferably 45 to 65 wt.-% of the LDPE,
both based on the total weight of outer layers (A);
optional additives and admixtures;
whereby both outer layers (A) are preferably identical in composition; and core layer (B) consists of
(B1) 65 to 85 wt.-%, preferably 70 to 80 wt.-% of the recycled LDPE;
(B2) 15 to 35 wt.-%, preferably 20 to 30 wt.-% of the copolymer of ethylene and one comonomer selected from alpha-olefins having from 4 to 10 carbon atoms, which copolymer of ethylene has a density of 930 to 970 kg/m$^3$, preferably of 932 to 965 kg/m$^3$, most preferably of 933 to 963 kg/m$^3$ and a melt flow rate $MFR_2$ of 0.10 to 2.0 g/10 min, preferably of 0.11 to 1.5 g/10 min, most preferably of 0.12 to 1.0 g/10 min,
both based on the total weight of core layer (B); and
optional additives and admixtures.

In a fourth preferred embodiment the multilayer collation shrink film consists of a core layer (B) sandwiched by two outer layers (A), wherein

both outer layers (A) consist of
(A1) 15 to 30 wt.-%, preferably 18 to 25 wt.-% of the multimodal copolymer of ethylene with at least one comonomer selected from alpha-olefins having from 4 to 10 carbon atoms, which multimodal polymer of ethylene has a density of 920 to 940 kg/m$^3$, preferably of 922 to 937 kg/m$^3$, most preferably of 925 to 935 kg/m$^3$ and a melt flow rate $MFR_2$ of 0.5 to 2.0 g/10 min, preferably 0.7 to 1.8 g/10 min, most preferably 1.0 to 1.6 g/10 min;
(A2) 70 to 85 wt.-%, preferably 75 to 82 wt.-% of the LDPE,
both based on the total weight of outer layers (A);
whereby the LDPE (A2) consists of a mixture of virgin LDPE and recycled LDPE in a weight ratio of 2.0 : 1.0 to 4.0 : 1.0, preferably of 2.5 : 1.0 to 3.5 : 1.0; and
optional additives and admixtures;
whereby both outer layers (A) are preferably identical in composition; and core layer (B) consists of
(B1) 65 to 85 wt.-%, preferably 70 to 80 wt.-% of the recycled LDPE;
(B2) 15 to 35 wt.-%, preferably 20 to 30 wt.-% of the copolymer of ethylene and one comonomer selected from alpha-olefins having from 4 to 10 carbon atoms, which copolymer of ethylene has a density of 930 to 970 kg/m$^3$, preferably of 932 to 965 kg/m$^3$, most preferably of 933 to 963 kg/m$^3$ and a melt flow rate $MFR_2$ of 0.10 to 2.0 g/10 min, preferably of 0.11 to 1.5 g/10 min, most preferably of 0.12 to 1.0 g/10 min,
both based on the total weight of core layer (B); and
optional additives and admixtures.

Method for manufacturing the multilayer collation shrink film

The present invention further relates to a method for manufacturing the multilayer collation shrink film according to the present invention. According to one preferred embodiment the multilayer collation shrink film is manufactured by a one-step blown film coextrusion process.

Use of the multilayer collation shrink film

The multilayer collation shrink film according to the present invention can be used for secondary packaging, preferably for bottles and cans more preferably bottles and cans in the field of household products, food, healthcare products, beverage products and bottles.
The invention will now be described with reference to the following non-limiting examples.

**Examples**

1. **Determination methods**

Melt flow rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polyethylene at a temperature of 190 °C and a load of 2.16 kg.

The $MFR_2$ of the high molecular weight ethylene polymer component polymerized in the second polymerization reactor is calculated from the $MFR_2$ of the low molecular weight ethylene polymer component polymerized in the first polymerization reactor and the $MFR_2$ of the base resin as follows:

$$\mathrm{LogMFR_{final} = wt\%_{1st} \ x \ LogMFR_{1st} + wt\%_{2nd} \ x \ LogMFR_{2nd}}$$

wherein

- "final" means "of the polyethylene resin"
- "1st" means "of the polymer component produced in the first reactor
- "2nd" means "of the polymer component produced in the second reactor.

Density

Density of the polymer was measured according to ISO 1183-1:2004 Method A on compression moulded specimen prepared according to EN ISO 1872-2 (Feb 2007) and is given in $kg/m^3$.

Comonomer content

$^{13}$C-NMR spectra were recorded on Bruker 400 MHz spectrometer at 130 °C from samples dissolved in 1, 2, 4-trichlorobenzene/benzene-d6 (90/10 w/w). Conversion between %wt and %mol can be carried out by calculation.

DSC Analysis

**Melting temperature Tm and Crystallization temperature Tc** were measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of 25 to +225°C. Crystallization temperature was determined from the cooling step, while melting temperature (Tm) and melting enthalpy (Hm) are determined from the second heating step.

*GPC conventional method*

Unless otherwise indicated, the GPC conventional method is used for the measurement of ethylene polymers - except for LDPE.

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were generally determined by Gel Permeation Chromatography (GPC) according to ISO 16014-4:2003 and ASTM D 6474-12 using the following formulas:

$$M_n = \frac{\sum_{i=1}^{N} A_i}{\sum_{i=1}^{N} (A_i/M_i)} \ (1)$$

$$M_w = \frac{\sum_{i=1}^{N} (A_i x \ M_i)}{\sum_{i=1}^{N} A_i} \ (2)$$

$$M_z = \frac{\sum_{i=1}^{N}(A_i \, x \, M_i^2)}{\sum_{i=1}^{N}(A_i x M_i)} \; (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methyl-phenol) was used. The chromatographic system was operated at column temperature of 160 °C and detector at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \; x \; 10^{-3} \; mL/g, \qquad \alpha_{PS} = 0.655$$

$$K_{PE} = 39 \; x \; 10^{-3} \; mL/g, \qquad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm BHT (butylated hydroxytoluene) under continuous gentle shaking with N2 gas purging.

Tensile properties

Tensile properties of molded specimens were determined on samples prepared from compression-moulded plaques having a sample thickness of 4 mm. Tensile modulus was determined according to ISO 527-2/1 A at 1 mm/min and 23°C. To determine tensile stress at yield, a speed of 50 mm/min was used.

Tensile modulus of films in machine direction (MD) and Tensile modulus of films in transverse direction (TD) were measured as 1% secant modulus with 5mm/min test speed and 50mm gauge length according to ASTM D882. Tensile stress at break of films were measured according to ISO 527-3 specimen Type 2 with 50mm gauge length and 500 mm/min test speed.

Charpy notched impact strength

The Charpy notched impact strength was measured according to ISO 179 1eA at 23 °C and - 20 °C, using molded bar test specimens of 80x10x4 mm$^3$ prepared by compression molding in accordance with ISO 294-1 or ISO 17855-2 using a melt temperature of 200°C.

Flexural modulus

The flexural modulus was determined in 3 -point-bending according to ISO 178 on molded specimens of 80 x 10 x 4 mm$^3$ prepared by compression molding in accordance with ISO 294-1 or ISO 17855-2 using a melt temperature of 200°C.

Strain hardening factor

The Strain hardening factor (SHF) was determined at 180°C .

The strain hardening factor is defined as

$$SHF = \frac{\eta_E^+(t,\dot{\varepsilon})}{\eta_{LVE}^+(t)} = \frac{\eta_E^+(t,\dot{\varepsilon})}{3\eta^+(t)}$$

wherein

$\eta_E^+(t,\dot{\varepsilon})$ is the uniaxial extensional viscosity; and $\eta_{LVE}^+(t)$, the Linear Viscoelastic Envelope (LVE), is three times the time dependent shear viscosity $\eta^+(t)$ in the linear range of deformation. The determination of the Linear Viscoelastic Envelop in extension, $\eta_{LVE}^+(t)$, is based on IRIS Rheo Hub 2008 requiring the calculation of the discrete relaxation time spectrum from the storage and loss modulus data (G', G" ($\omega$)). The determination of the linear viscoelastic data G'($\omega$), G"($\omega$) is obtained by frequency sweep measurements undertaken at 180°C, on a Anton Paar MCR 301 coupled with 25 mm parallel plates.

The underlying calculation principles used for the determination of the discrete relaxation spectrum are described in Baumgartel M. Winter H H, "Determination of the discrete relaxation and retardation time spectra from dynamic mechanical data", Rheol Acta 28:511519 (1989) which is incorporated by reference in its entirety.

IRIS Rheo Hub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$, and $\lambda_i$ are material parameters and $G_e$ is the equilibrium modulus.

The choice for the maximum number of modes, N used for determination of the discrete relaxation spectrum, is done by using the option "optimum" from IRIS RheoHub. The equilibrium modulus $G_e$ was set at zero.

The non-linear fitting used to obtain $\eta_{LVE}^+(t)$ is performed on IRIS Rheo Hub 2008, using the Doi-Edwards model.

The uniaxial extensional viscosity $\eta_E^+(t,\dot{\varepsilon})$ is obtained from uniaxial extensional flow measurements, conducted on an Anton Paar MCR 501 coupled with the Sentmanat extensional fixture. The temperature for the uniaxial extensional flow measurements was set at 180°C, applying extension rates d$\varepsilon$/dt ranging from 0.3 s$^{-1}$ to 10 s$^{-1}$, and covering a range of Hencky strain

$$\varepsilon = (I - I_0)/I_0,$$

with $I_0$, being the original and I the actual sample fixation length, from 0.3 to 3.0. Particularly care was taken for the preparation of the samples for extensional flow. The samples were prepared by compression moulding at 180°C followed by controlled cooling to room temperature (forced water or air cooling were not used).

This procedure allowed obtaining well shaped samples free of residual stresses. The sample was left for some minutes at the testing temperature to ensure thermal stability (set temperature ±0.1°C.), before carrying out the uniaxial extensional measurements.

Film shrinkage

Determination of shrinkage was performed in oil according to ISO 14616 and/or ISO 11501. 60mm x 60mm film samples are placed in oil (Polydimethylsiloxan) at 160°C for 15 seconds. After this the samples are removed, and conditioned at room temperature for 1 hour. Finally the shrinkage, i.e. change in dimension is measured. Shrinkage values are calculated as:

$$\text{Shrinkage} = (Lo - Lm) * 100/Lo$$

wherein Lo is the original length (i.e. 60 mm), and Lm is the length measured after thermal exposure. If the measured value increases (e.g. in the TD direction), then shrinkage is negative.

Optical properties

**Haze** measured on three-layered collation shrink films, prepared as described in the example section below according to ASTM D 1003.

**Gloss** is measured on three-layered collation shrink films, prepared as described in the example section below according to DIN 67530/ISO 2813 at an angle of 60°. Gloss values are recorded and reported as gloss units (GU).

Puncture resistance

Protrusion Puncture Resistance testing is conducted according to ASTM D5748 on three-layered blown films with a thickness of 60 $\mu$m, prepared as described in the example section below. This test method determines the resistance of a film sample to the penetration of a probe with specific size of 19mm diameter pear-shaped TFE fluorocarbon coated at a standard low rate, a single test velocity (250 mm/min). Performed at standard conditions, the test method imparts a biaxial stress loading. Cut the film specimens 150mmx 150mm to fit into the jig and conditioning done at $23\pm2^0$C at $50\pm5\%$ relative humidity.

The Puncture Resistance Energy (J) is the energy used until the probe breaks the test specimen, both are measured using the high accuracy 500N loadcell and crosshead position sensor.

Seal initiation temperature (SIT)

In principle, heat seal is formed by bonding two films (polymeric) in the way that surfaces are pressed together into a close contact while being at least in partially molten. This test method also covers the evaluation part after the heat seal process is performed. The force required to separate a test strip of film containing the seal is measured using UTM (also to identify the mode of specimen failure). Following the ASTM F 2029; ASTM F 88 standard, a tested specimen with a preferred film thickness of 30 microns where the sealed surfaces are selected. Samples should be conditioned for at least 24hrs in the case of PE after sealing at $23\pm2$°C and $50\pm5$ % relative humidity. For testing, a minimum of five specimens shall be used for each seal temperature. The term "seal initiation temperature" (SIT) is specified as the "heat seal initiation temperature at 5N" and it refers to the temperature at which a seal is formed that will have a seal strength of 5N after cooling. The temperature at which a heat seal forms immediately after the sealing operation (sealing time 1.0 seconds, sealing pressure 3 bar for less than 65 micron film and sealing time 1.5 seconds for 65 micron and above thickness), the strength of the heat seal being measured at a specified time interval (at least 24 hrs after completion of the sealing cycle and after the seal has cooled to ambient temperature and reached maximum strength).

**2. Materials used**

| | |
|---|---|
| FB1350 | bimodal ethylene/1-butene copolymer (MDPE) having a melt flow rate MFR$_2$ of 0.15 g/10 min, MFR$_5$ of 0.60 g/10 min and a density of 935 kg/m$^3$, commercially available from Borouge; |
| FB5600 | bimodal ethylene/1-butene copolymer (HDPE) having a melt flow rate MFR$_2$ of 0.7 g/10 min and a density of 960 kg/m$^3$, commercially available from Borouge; |
| FT5236 | tubular LDPE having a melt flow rate MFR$_2$ of 0.75 g/10 min and a density of 923 kg/m$^3$, commercially available from Borouge; having slip additives. |
| HP0322N | tubular LDPE having a melt flow rate MFR$_2$ of 0.33 g/10 min and a density of 922 kg/m$^3$, commercially available from SABIC (Saudi Basic Industries Corporation); |
| FK1820 | multimodal ethylene/1-butene/1-hexene terpolymer having a melt flow rate MFR$_2$ of 1.5 g/10 min and a density of 918 kg/m$^3$, commercially available from Borouge; |
| FK2715 | multimodal ethylene/1-butene/1-hexene terpolymer having a melt flow rate MFR$_2$ of 1.3 g/10 min and a density of 927 kg/m$^3$, commercially available from Borouge; |
| 3505MC | Enable 3505MC; a metallocene catalyzed ethylene/1-hexene copolymer having a melt flow rate MFR$_2$ of 0.5 g/10 min and a density of 935 kg/m$^3$, commercially available from ExxonMobil; |

(continued)

| | |
|---|---|
| 1327MD | Exceed 1327MD; a metallocene catalyzed ethylene/1-hexene copolymer having a melt flow rate $MFR_2$ of 1.3 g/10 min and a density of 927 kg/m$^3$, commercially available from ExxonMobil; |
| rLDPE1 | PCR-LDPE(ML)-A; post-consumer waste LDPE (with a content of LDPE + LLDPE together >80 wt%) having a melt flow rate $MFR_2$ of 1.1 g/10 min and a density of 925 kg/m$^3$, commercially available from Suzhou Jinhui Technology; |
| rLDPE2 | post-consumer waste LDPE having a melt flow rate $MFR_2$ of 0.8 g/10 min and a density of 923 kg/m$^3$, commercially available from Plaspulp. |

### 3. Properties of materials

rLDPE

The properties of rLDPE1 and rLDPE2 were measured on moulded specimen and are listed below in Table 1.

Table 1: Properties of rLDPE1 and rLDPE2

| Properties | rLDPE1 | rLDPE2 |
|---|---|---|
| Tensile modulus | 309 MPa | 319 MPa |
| Tensile stress at yield | 10.6 MPa | 10.7 MPa |
| Tensile strain at break | 808 % | 475 % |
| Flexural modulus | 379 MPa | 317 MPa |
| Charpy notched impact strength, 23°C | 78.7 kJ/m$^2$ | 60.6 kJ/m$^2$ |
| Charpy notched impact strength, -20°C | 11.3 kJ/m$^2$ | 8.8 kJ/m$^2$ |

Strain hardening factor

The strain hardening factor (SHF) of FT5230 (virgin LDPE), rLDPE1 and rLDPE2 was measured at 180°C, at a strain rate of 3.0 s$^{-1}$ and a Hencky strain of 2.5. The results are shown below in Table 2.

Table 2: Strain hardening factor

| Material | SHF |
|---|---|
| FT5236 (virgin LDPE) | 2.90 |
| rLDPE1 | 2.02 |
| rLDPE2 | 3.14 |

### 4. Collation shrink films

The films were produced on a commercial scale 3-layer extrusion blown film line (Polyrema) with three extruders (extruder temperature main zone setting 180 to 220°C, die diameter 180 mm, blow up ratio (BUR) 1:3, die gap 1.8 mm, with internal bubble cooling). The blown films made of polyethylene blends are described herein for each film layer. Any polyethylene blend used in the above described film layers can be produced by any suitable conventional multi-layer film extrusion line, preferably at a temperature of 150 to 230 °C, more preferably 160 to 225°C. Conventional blown film production techniques used in this regard, which in principle are known and available to the skilled person. Typically each film layers are coextruded at a temperature in the range of from 160 to 225 °C , die temperature in the range of 205 to 220 °C and cooled by blowing air at a temperature of 12 to 16 °C, to provide a frost line height of 1 to 2 times of the diameter of the die. Blown films were produced on a Polyrema (Reifenhauser blown film line with internal bubble cooling system) having an output of 150 kgs/hr.

In a first approach ABC films layer of comparative examples CE-1 and CE-2 and inventive examples IE-1 and IE-2 with a total thickness 60 to 70 $\mu$m were produced with a thickness distribution of the ABC films was 20%/60%/20%. In the first approach the overall rLDPE content of the ABC films was in the range of 15 to 20 wt%. Seal layer (C) is identical to outer layer (A) in thickness and composition. The compositions of the ABC films layers of the first approach are shown in Table 3 below.

In a second approach ABC films layers of comparative example CE-3 and inventive examples IE-3, IE-4 and IE-5 with a total thickness 60 to 70 $\mu$m were produced with a thickness distribution of the ABC films was 25%/50%/25%. In the second approach the overall rLDPE content of the ABC films was in the range of 35 to 40 wt%. Seal layer (C) is identical to outer layer (A) in thickness and composition. The compositions of the ABC films layers of the second approach are shown in Table 4 below.

Table 3: Collation shrink films of first approach (ABC film layers)

| Samples | Outer Layer (A) | Core Layer (B) | Seal layer (C) |
|---|---|---|---|
| Thickness layer ratio | 20% | 60% | 20% |
| CE-1 | 80 wt% FK2715 + 20wt% FT5236 | 40 wt% FB5600 + 40 wt% HP0322NN + 20 wt% FK1820 | 80 wt% FK2715 + 20% FT5236 |
| CE-2 | 50 wt% FK2715 + 40 wt% HP0322N + 10 wt% FB5600 | 40 wt%FB5600 + 30 wt%FB1350 + 30 wt%HP0322NN | 50 wt% FK2715 + 40 wt% HP0322N + 10 wt% FB5600 |
| IE-1 | 80 wt%% FK2715 + 20 wt% HP0322NN | 25 wt% FB5600 + 50 wt% rLDPE2 + 25 wt% FK1820 | 80 wt% FK2715 + 20 wt% HP0322NN |
| IE-2 | 50 wt% FK2715 + 40 wt% HP0322N + 10 wt% FB5600 | 40 wt%FB5600 + 30 wt% FB1350 + 30 wt% rLDPE2 | 50 wt% FK2715 + 40 wt% HP0322N + 10 wt% FB5600 |

Table 4: Collation shrink films of second approach (ABC film layers)

| Samples | Outer Layer (A) | Core Layer (B) | Seal layer (C) |
|---|---|---|---|
| Thickness layer ratio | 25% | 50% | 25% |
| CE-3 | 50 wt% FT5236 + 50 wt% 1327MD | 75 wt% rLDPE1 + 25 wt% 3505MC | 50 wt% FT5236 + 50 wt% 1327MD |
| IE-3 | 50 wt% FT5236 + 50 wt% FK2715 | 75 wt% rLDPE1 + 25 wt% FB1350 | 50 wt% FT5236 + 50 wt% FK2715 |
| IE-4 | 60 wt% FT5236 + 40 wt% FK2715 | 75 wt% rLDPE1 + 25 wt% FB1350 | 60 wt% FT5236 + 40 wt% FK2715 |
| IE-5 | 60 wt% /FT5236 + 20 wt% FK2715 + 20 wt% rLDPE1 | 75 wt% rLDPE1 + 25 wt% FB1350 | 60 wt% /FT5236 + 20 wt% FK2715 + 20 wt% rLDPE1 |

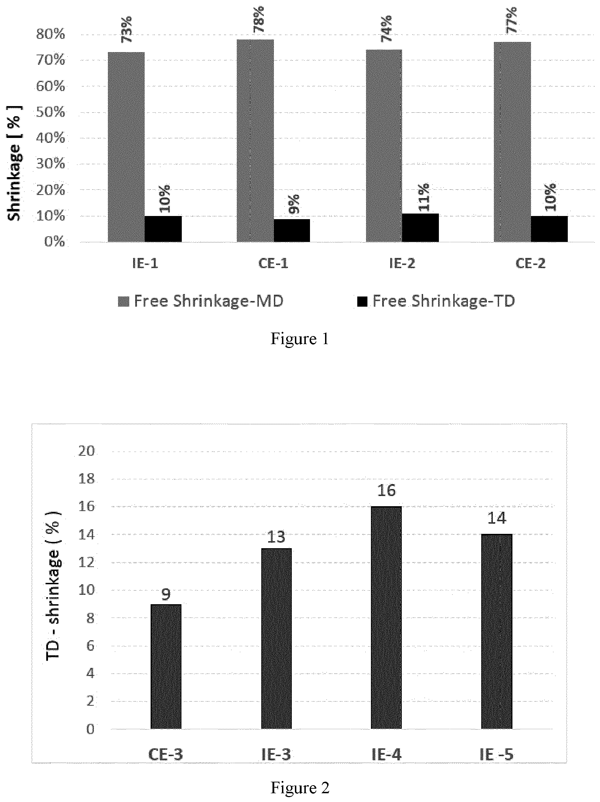

The film shrinkage in machine direction (MD) and transverse direction (TD) of films of examples IE-1, IE-2, CE-1 and CE-2 were measured and shown in Figure 1.

The films of IE-1 and IE-2 show a film shrinkage MD of 73% and 74%, which is slightly lower than that of CE-1 and CE-2 , but all are in comparable range (in between 72 to 78%). The films of IE-1 and IE-2 show a film shrinkage TD of 10% and 11%, which is comparable to that of CE-1 and CE-2.

The film shrinkage in transverse direction (TD) of films of examples IE-3, IE-4, IE-5 and CE-3 were measured and shown in Figure 2. All these film examples of IE-3, IE-4, IE-5 and CE-3 show a film shrinkage MD of 75 to 77%, which is comparable to each other.

The films of IE-3, IE-4 and IE-5 show a film shrinkage TD of 13 to 16%, whereas CE-3 shows a film shrinkage TD of 9%.

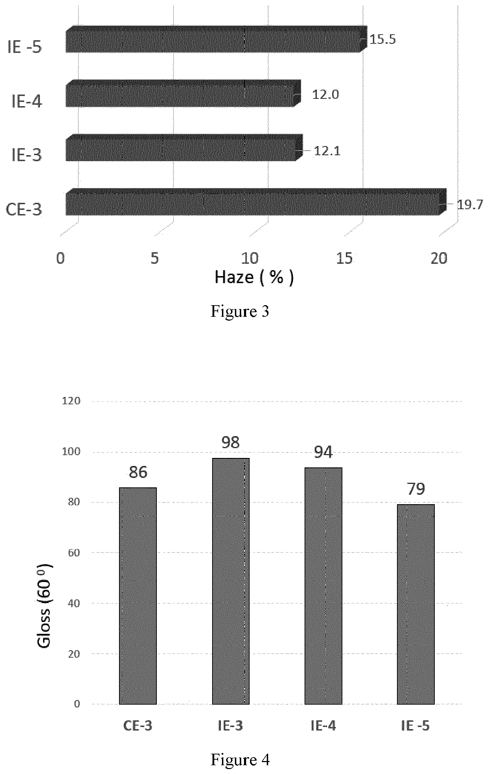

The optical properties of examples IE-3, IE-4, IE-5 and CE-3 were measured and shown in Figure 3 (haze) and Figure 4 (gloss at 60°).

The films of IE-3, IE-4 and IE-5 show a haze of 12.0 to 15.5%, whereas CE-3 shows a haze of 19.7%.

The films of IE-3, IE-4 and IE-5 show a gloss at 60° of 79 to 98GU, whereas CE-3 shows a gloss at 60° of 86GU.

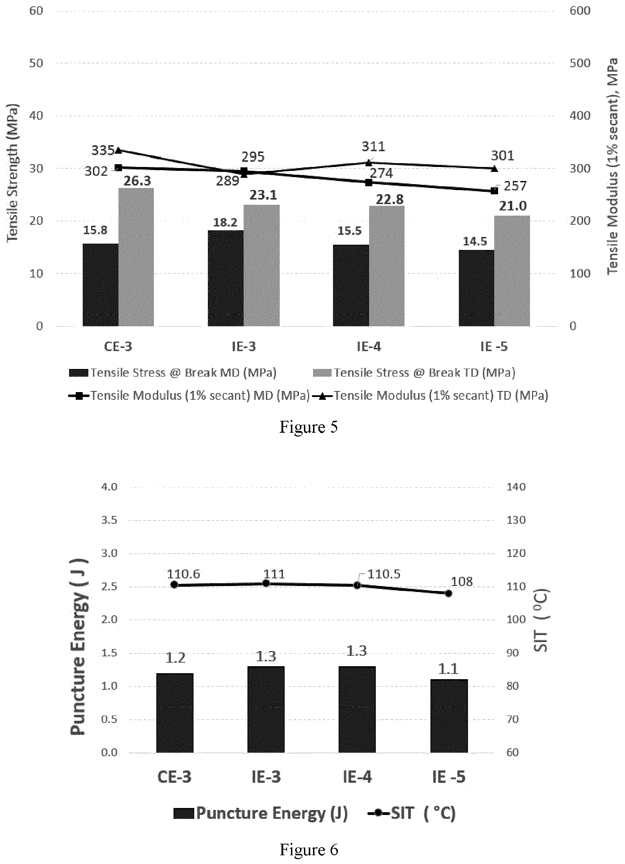

The tensile properties of examples IE-3, IE-4, IE-5 and CE-3 were measured and shown in Figure 5.

The films of IE-3, IE-4 and IE-5 show a tensile modulus in machine direction (MD) of 257-295 MPa, whereas CE-3 shows a tensile modulus in machine direction (MD) of 302 MPa. The films of IE-3, IE-4 and IE-5 show a tensile modulus in transverse direction (TD) of 289-311 MPa, whereas CE-3 shows a tensile modulus in transverse direction (TD) of 355 MPa. The films of IE-3, IE-4 and IE-5 show a tensile stress at break in machine direction (MD) of 14.5 to 18.2MPa, whereas CE-3 shows a tensile stress at break in machine direction (MD) of 15.8MPa.

The films of IE-3, IE-4 and IE-5 show a tensile stress at break in transverse direction (TD) of 21.0 to 23.1MPa, whereas CE-3 shows a tensile stress at break in transverse direction (TD) of 26.3MPa.

The puncture energy and SIT of examples IE-3, IE-4, IE-5 and CE-3 were measured and shown in Figure 6.

The films of IE-3, IE-4 and IE-5 show a puncture energy of 1.1 to 1.3 J, whereas CE-3 shows a puncture energy of 1.2 J.

The films of IE-3, IE-4 and IE-5 show a SIT of 108.0 to 111.1°C, whereas CE-3 shows a SIT of 110.6°C.

The films according to the invention show a comparable TD shrinkage, which is commonly acceptable in the market, comparable mechanical properties, comparable puncture energy and comparable SIT whereas the films according to the invention show improved haze and comparable gloss.

Thus, the films according to the invention show a good balance of properties of shrinkage, mechanical properties, puncture resistance, sealing properties and optical properties, which surprisingly is not impaired by the presence of recycled LDPE in amounts of up to 40 wt%.

**Claims**

1. A multilayer collation shrink film comprising at least the following layers:

    (A) a layer comprising the following components:

        (A1) a multimodal copolymer of ethylene with at least one comonomer selected from alpha-olefins having from 4 to 10 carbon atoms, which multimodal polymer of ethylene has a density of 920 to 940 kg/m$^3$, preferably of 922 to 937 kg/m$^3$, most preferably of 925 to 935 kg/m$^3$, determined according to ISO 1183, and a melt flow rate MFR$_2$ of 0.5 to 2.0 g/10 min, preferably 0.7 to 1.8 g/10 min, most preferably 1.0 to 1.6 g/10 min, determined according to ISO 1133 at a temperature of 190°C and a load of 2.16 kg; and
        (A2) a LDPE; and

    (B) a layer comprising the following components:

        (B1) a recycled LDPE;
        (B2) a copolymer of ethylene and one comonomer selected from alpha-olefins having from 4 to 10 carbon atoms, which copolymer of ethylene has a density of 930 to 970 kg/m$^3$, preferably of 932 to 965 kg/m$^3$, most preferably of 933 to 963 kg/m$^3$, determined according to ISO 1183, and a melt flow rate MFR$_2$ of 0.10 to 2.0 g/10 min, preferably of 0.11 to 1.5 g/10 min, most preferably of 0.12 to 1.0 g/10 min, determined according to ISO 1133 at a temperature of 190°C and a load of 2.16 kg.

2. The multilayer collation shrink film according to claim 1, wherein the multilayer film comprises, preferably consists of 3 layers, preferably wherein layer (B) is the core layer and layer (A) is an outer layer in adherent contact with core layer (B), more preferably wherein layer (B) is the core layer which is sandwiched between two layers (A), wherein both layers (A) are preferably in adherent contact with each surface of core layer (B).

3. The multilayer collation shrink film according to claims 1 or 2, wherein

    the multimodal copolymer of ethylene (A1) is present in layer (A) in an amount of 15 to 90 wt%, preferably from 18 to 85 wt%, most preferably from 20 to 82 wt% and
    the LDPE (A2) is present in layer (A) in an amount of 10 to 85 wt%, preferably from 15 to 82 wt%, most preferably from 18 to 80 wt%,
    both based on the total weight amount of layer (A); and
    the recycled LDPE (B1) is present in layer (B) in an amount of 20 to 85 wt%, preferably from 25 to 80 wt%, most preferably from 27 to 77 wt% and
    the copolymer of ethylene (B2) is present in layer (B) in an amount of 15 to 80 wt%, preferably from 20 to 75 wt%, most preferably from 23 to 73 wt%,
    both based on the total weight amount of layer (B).

4. The multilayer collation shrink film according to any one of the preceding claims, wherein the thickness of one layer (B) in the multilayer collation shrink film is in the range of from 40 to 70 %, preferably from 44 to 66 %, most preferably from 48 to 62 %, and the thickness of one layer (A) in the multilayer collation shrink film is in the range of from 10 to 30 %, preferably from 15 to 28 %, most preferably from 19 to 26 %, both based on the total thickness of the multilayer collation shrink film.

5. The multilayer collation shrink film according to any one of the preceding claims, wherein the LDPE (A2) comprises virgin LDPE, recycled LDPE or mixtures of virgin LDPE and recycled LDPE, wherein the weight ratio of virgin LDPE to recycled LDPE in the mixture is preferably in the range of 5:1 to 1:2, more preferably of 4:1 to 1:1, most preferably from 3:1 to 2:1.

6. The multilayer collation shrink film according to any one of the preceding claims, wherein the total amount of recycled LDPE in the multilayer collation shrink film is from 10 to 55 wt%, preferably from 12 to 53 wt%, most preferably from 15 to 50 wt%, based on the total weight of the multilayer collation shrink film.

7. The multilayer collation shrink film according to any one of the preceding claims, wherein the recycled LDPE (B1) originates from post consumer waste or post industrial waste, preferably from post consumer waste.

8. The multilayer collation shrink film according to any one of the preceding claims, wherein the recycled LDPE (B1) has one or more or all of the following properties:

 • a density of from 915 to 935 $kg/m^3$, preferably of 917 to 932 $kg/m^3$, most preferably of 920 to 930 $kg/m^3$, determined according to ISO 1183;
 • a melt flow rate $MFR_2$ of 0.1 to 2.0 g/10 min, preferably of 0.3 to 1.7 g/10 min, most preferably of 0.5 to 1.5 g/10 min, determined according to ISO 1133 at a temperature of 190°C and a load of 2.16 kg;
 • a tensile modulus of from 200 to 450 MPa, preferably from 225 to 425 MPa, most preferably from 250 to 400 MPa, determined according to ISO 527-2/1 A;
 • a tensile stress at yield of from 6.0 to 15.0 MPa, preferably from 7.5 to 12.5 MPa, most preferably from 9.0 to 11.5 MPa, determined according to ISO 527-2/1 A;
 • a tensile strain at break of from 350 to 1200 %, preferably from 375 to 1100 %, most preferably from 400 to 1000 %, determined according to ISO 527-2/1 A;
 • a flexural modulus of from 200 to 500 MPa, preferably from 225 to 475 MPa, most preferably from 250 to 450 MPa, determined according to ISO 178;
 • a Charpy notched impact strength at 23°C of from 40 to 120 $kJ/m^2$, preferably from 45 to 110 $kJ/m^2$, most preferably from 50 to 100 $kJ/m^2$, determined according to ISO 179 1eA;
 • a Charpy notched impact strength at -20°C of from 5.0 to 20.0 $kJ/m^2$, preferably from 6.0 to 18.0 $kJ/m^2$, most preferably from 7.0 to 16.0 $kJ/m^2$, determined according to ISO 179 1eA; and/or
 • a strain hardening factor of from 1.5 to 5.0, preferably from 1.8 to 4.5, when measured at 180°C, at a strain rate of 3.0 $s^{-1}$ and a Hencky strain of 2.5.

9. The multilayer collation shrink film according to any one of the preceding claims, wherein the copolymer of ethylene (B2) is a medium density copolymer of ethylene and one comonomer selected from alpha-olefins having from 4 to 10 carbon atoms having a density of 930 to 945 $kg/m^3$, preferably of 932 to 942 $kg/m^3$, most preferably of 933 to 940 $kg/m^3$, determined according to ISO 1183, and a melt flow rate $MFR_2$ of 0.10 to 0.50 g/10 min, preferably of 0.10 to 0.40 g/10 min, most preferably of 0.12 to 0.30 g/10 min, determined according to ISO 1133 at a temperature of 190°C and a load of 2.16 kg, and/or a high density copolymer of ethylene and one comonomer selected from alpha-olefins having from 4 to 10 carbon atoms, having a density of 950 to 970 $kg/m^3$, preferably of 952 to 965 $kg/m^3$, most preferably of 955 to 963 $kg/m^3$, determined according to ISO 1183, and a melt flow rate $MFR_2$ of 0.30 to 2.0 g/10 min, preferably of 0.40 to 1.5 g/10 min, most preferably of 0.50 to 1.0 g/10 min, determined according to ISO 1133 at a temperature of 190°C and a load of 2.16 kg, or a mixture of the medium density copolymer of ethylene and the high density copolymer of ethylene and/or, wherein the copolymer of ethylene (B2) is a copolymer of ethylene and 1-butene comonomer units or a copolymer of ethylene and 1-hexene comonomer units, wherein the 1-butene comonomer units or the 1-hexene comonomer units are the only comonomer units present in the copolymer of ethylene (B2).

10. The multilayer collation shrink film according to any one of the preceding claims, wherein the multimodal copolymer of ethylene (A1) is a terpolymer of ethylene with two different comonomers selected from alpha-olefins having from 4 to 10 carbon atoms, preferably the multimodal copolymer of ethylene (A1) is a terpolymer of ethylene, 1-butene comonomer units and 1-hexene comonomer units, wherein the 1-butene comonomer units and the 1-hexene comonomer units are the only comonomer units present in the copolymer of ethylene (A1), more preferably comprises a copolymer of ethylene and 1-butene comonomer units and a copolymer of ethylene and 1-hexene comonomer units.

11. The multilayer collation shrink film according to any one of the preceding claims, wherein the LDPE (A2) has a density of from 915 to 935 kg/m$^3$, preferably of 917 to 932 kg/m$^3$, most preferably of 920 to 930 kg/m$^3$, determined according to ISO 1183, and a melt flow rate MFR$_2$ of 0.1 to 2.0 g/10 min, preferably of 0.2 to 1.5 g/10 min, most preferably of 0.3 to 1.2 g/10 min, determined according to ISO 1133 at a temperature of 190°C and a load of 2.16 kg.

12. The multilayer collation shrink film according to any one of the preceding claims, wherein layer (B) further comprises (B3) a multimodal polymer of ethylene with at least two different comonomers selected from alpha-olefins having from 4 to 10 carbon atoms, which multimodal polymer of ethylene has a density of 910 to 930 kg/m$^3$, preferably of 912 to 927 kg/m$^3$, most preferably of 915 to 925 kg/m$^3$, determined according to ISO 1183, and a melt flow rate MFR$_2$ of 0.5 to 2.5 g/10 min, preferably 1.0 to 2.0 g/10 min, most preferably 1.2 to 1.8 g/10 min, determined according to ISO 1133 at a temperature of 190°C and a load of 2.16 kg.

13. The multilayer collation shrink film according to any one of the preceding claims having one or more or all of the following properties:

    • a shrinkage in machine direction of from 60 to 85%, preferably from 65 to 82%, most preferably from 70 to 80%, determined according to ISO 14616 and/or ISO 11501;
    • a shrinkage in transverse direction of from 5 to 25%, preferably from 7 to 22%, most preferably from 9 to 20%, determined according to ISO 14616 and/or ISO 11501;
    • a haze of from 5.0 to 19.0%, preferably from 7.0 to 18.0%, most preferably from 8.0 to 17.0%, determined according to ASTM D 1003;
    • a gloss at 60° of from 70 to 130, preferably from 73 to 120, most preferably from 75 to 110, determined according to DIN 67530/ISO 2813;
    • a tensile modulus in machine direction of from 225 to 600 MPa, preferably from 240 to 550 MPa, most preferably from 250 to 500 MPa, determined according to ASTM D 882;
    • a tensile modulus in transverse direction of from 250 to 650 MPa, preferably from 265 to 600 MPa, most preferably from 275 to 550 MPa, determined according to ASTM D 882;
    • a tensile stress at break in machine direction of from 12.0 to 40.0 MPa, preferably from 13.0 to 38.0 MPa, most preferably from 14.0 to 36.0 MPa, determined according to ISO 527-3;
    • a tensile stress at break in transverse direction of from 15.0 to 40.0 MPa, preferably from 18.0 to 36.0 MPa, most preferably from 20.0 to 32.0 MPa, determined according to ISO 527-3;
    • a puncture energy of from 0.8 to 3.0 J, preferably from 0.9 to 2.5 J, most preferably from 1.0 to 2.0 J, determined according to ASTM D 5748; and/or
    • a sealing initiation temperature of from 100 to 125°C, preferably from 103 to 120°C, most preferably from 105 to 115°C, determined according to ASTM F 2029, ASTM F 88.

14. A method for manufacturing the multilayer collation shrink film according to any one of the preceding claims, **characterized in that** the film is manufactured by a one-step blown film coextrusion process.

15. Use of the multilayer collation shrink film according to any one of the preceding claims for secondary packaging, preferably for bottles and cans, more preferably for bottles and cans in the field of household products, food, healthcare products and beverage products.

Figure 1

Figure 2

Figure 3

Figure 4

Figure 5

Figure 6

Europäisches
Patentamt

European
Patent Office

Office européen
des brevets

# EUROPEAN SEARCH REPORT

Application Number

EP 22 21 4436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/207940 A1 (BOREALIS AG [AT]) 15 October 2020 (2020-10-15) * the whole document * | 1-15 | INV. B32B7/023 B32B7/028 B32B27/28 |
| A | WO 2022/258804 A1 (BOREALIS AG [AT]) 15 December 2022 (2022-12-15) * abstract; claims 1-15 * * page 19 * | 1-15 | B32B27/30 B32B27/32 C08J5/08 C08L23/06 |

**TECHNICAL FIELDS SEARCHED (IPC)**

B32B
C08J
C08L

The present search report has been drawn up for all claims

| Place of search | Date of completion of the search | Examiner |
|---|---|---|
| The Hague | 2 May 2023 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4436

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2023

| Patent document cited in search report | | Publication date | Patent family member(s) | | Publication date |
|---|---|---|---|---|---|
| WO 2020207940 | A1 | 15-10-2020 | CA | 3136026 A1 | 15-10-2020 |
| | | | CN | 113661062 A | 16-11-2021 |
| | | | EP | 3953174 A1 | 16-02-2022 |
| | | | KR | 20210137226 A | 17-11-2021 |
| | | | US | 2022097351 A1 | 31-03-2022 |
| | | | WO | 2020207940 A1 | 15-10-2020 |
| WO 2022258804 | A1 | 15-12-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9117886 A1
- DE 202018101226 U1
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- WO 9618662 A
- US 4582816 A
- US 3405109 A
- US 3324093 A
- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- US 4621952 A
- EP 188125 A
- EP 250169 A
- EP 579426 A
- WO 2016083208 A

**Non-patent literature cited in the description**

- Polymer Handbook. Wiley, 1989
- **BAUMGARTEL M. ; WINTER H H.** Determination of the discrete relaxation and retardation time spectra from dynamic mechanical data. *Rheol Acta,* 1989, vol. 28, 511519